# EUROPEAN PATENT SPECIFICATION

(11) **EP 2 498 446 B1**
(45) Date of publication and mention of the grant of the patent: **01.08.2018**
(21) Application number: 10835441.6
(22) Date of filing: 17.11.2010
(51) Int. Cl.: H04L 12/40, H04L 12/935

(54) **METHOD AND APPARATUS COMPATIBLE WITH 10GE LAN PORT AND WAN PORT**
EIN MIT 10GE-LAN-PORTS UND -WAN-PORTS KOMPATIBLES VERFAHREN UND VORRICHTUNG DAFÜR
PROCÉDÉ ET APPAREIL COMPATIBLES AVEC UN PORT LAN 10GE ET UN PORT WAN 10GE

(30) Priority: 08.12.2009 CN 200910252087
(43) Date of publication of application: 12.09.2012
(73) Proprietor: ZTE Corporation, Shenzhen, Guangdong 518057 (CN)
(72) Inventor: HE, Xiuhong, Guangdong 518057 (CN)
(74) Representative: Manitz Finsterwald Patentanwälte PartmbB
(86) International application number: PCT/CN2010/078825
(87) International publication number: WO 2011/069406

(56) References cited:
- CN-A- 1 795 435
- CN-A- 101 009 618
- CN-A- 101 388 816
- CN-A- 101 719 856
- US-A1- 2003 058 894
- US-A1- 2006 002 419
- US-A1- 2009 080 459
- US-B1- 6 618 392

## Description

### Technical Field

The present invention relates to Ethernet technology, and in particular, to a method and apparatus compatible with a 10GE (10 Gigabit Ethernet) LAN (Local Area Network) port and a WAN (Wide Area Network) port.

### Background Art

With the rapid development of Ethernet, the requirement of data traffic on the bandwidth becomes higher and higher, and the Ethernet technology supporting data services also develops from 10M Ethernet, 100M Ethernet and 1000M Ethernet to the latest 10,000 M Ethernet, namely, 10GE.

The 10GE technology is a physical layer and data link layer technology defined in the Open System Interconnection (OSI) seven-layer reference model, the data link layer of OSI corresponds to the MAC (Media Access Control) Layer of 10GE, the physical layer of OSI corresponds to the PHY (Physical) Layer of 10GE; in the architecture of 10GE, PHY may be further divided into Physical Media Dependent (PMD) sublayer and Physical Coding Sublayer (PCS).

The 10GE technology formulates two different physical layer standards, one being 10GE "LAN PHY" (10GE LAN physical layer channel) connected with the traditional Ethernet, which corresponds to the 10GE LAN port and supports 10GE LAN services, with a bit rate of 10.3125Gbps; the other one being 10GE "WAN PHY" (10GE WAN physical layer channel) connected with SDH (Synchronous Digital Hierarchy)/SONET (Synchronous Optical Network) wide area network, which corresponds to a 10GE WAN port and supports 10GE WAN services, with a bit rate of 9.95328Gbps. The difference between LAN PHY and WAN PHY lies in difference of PCS, WAN PHY has a WAN Interface Sublayer (WIS), comprises a simplified SONET/SDH framer and supports OC-192/STM-64.

Since 10GE LAN PHY and WAN PHY work in different environments, their requirements on various norms are greatly different, and the required configuration modes of the system are also different. Therefore, the current 10GE device generally only supports one of 10GE LAN port and 10GE WAN port, which severely limits the application scope of the device.

The features of the preamble of the independent claims are known from US2003/058894A1.

### Summary of the Invention

The technical problem to be solved in the present invention is to provide a method and apparatus compatible with a 10GE LAN port and a WAN port as defined in the independent claims, so as to solve the limitation in the prior art that the 10GE device can only support one of the above two ports.

In order to solve the above problem, a method compatible with a 10GE Local Area Network (LAN) port and a Wide Area Network (WAN) port is provided according to independent claim 1. The above method may further have the following feature:
the step of the 10GE device setting the 10GE physical layer channel into a corresponding working mode according to working mode information carried in the command comprises: the 10GE device setting a voltage on a mode selection pin in the 10GE physical layer channel to be a value indicating the corresponding working mode through level control.

The above method may further comprise:
when the voltage on the mode selection pin is set to be a high level, the 10GE physical layer channel selecting to work in the 10GE WAN port working mode, and when the voltage is set to be a low level, the 10GE physical layer channel selecting to work in the 10GE LAN port working mode;
or, when the voltage on the mode selection pin is set to be a high level, the 10GE physical layer channel selecting to work in the 10GE LAN port working mode, and when the voltage is set to be a low level, the 10GE physical layer channel selecting to work in the 10GE WAN port working mode.

An apparatus compatible with a 10GE (10 Gigabit Ethernet) LAN (Local Area Network) port and a WAN (Wide Area Network) port is also provided according to independent claim 4. The above apparatus may further have the following feature:
the control unit is configured to set the 10GE physical layer channel into a corresponding working mode according to working mode information carried in the mode selection command in the following way: setting a voltage on a mode selection pin in the 10GE physical layer channel to be a value indicating the corresponding working mode through level control.

The above apparatus may further have the following feature:
when the voltage on the mode selection pin is set to be a high level, select to work in the 10GE WAN port working mode, and when the voltage on the mode selection pin is set to be a low level, select to work in the 10GE LAN port working mode;
or, when the voltage on the mode selection pin is set to be a high level, select to work in the 10GE LAN port working mode, and when the voltage on the mode selection pin is set to be a low level, select to work in the 10GE WAN port working mode.

The above apparatus may further have the following feature:
the 10GE physical layer channel is a special physical layer (PHY) chip supporting a 10GE LAN port and a 10GE WAN port.

The above apparatus may further have the following feature:
the configurable clock unit is constituted by a multi-rate clock frequency doubling chip and a clock drive chip.

By using the present invention, each module in the 10GE device can be configured correspondingly according to application requirements, the 10GE port can be configured into two modes of 10GE LAN port and 10GE WAN port, so that the 10GE port can connect not only the 10GE LAN service but also the 10GE WAN services, thereby realizing the application of the 10GE device in LAN and WAN, enriching the functions of the port without increasing development costs and expanding the application range of the device.

### Brief Description of Drawings

FIG. 1 illustrates the structure of the device compatible with a 10GE LAN port and WAN port according to an example of the present invention.
FIG. 2 is a flowchart of the method compatible with a 10GE LAN port and a WAN port according to an example of the present invention.

### Preferred Embodiments of the Invention

The technical scheme of the present invention will be described below in further detail with reference to the drawings and the examples.

The method of the preset invention is applied to a 10GE device containing a 10GE physical layer channel compatible with a 10GE LAN port working mode and a 10GE WAN port working mode, and the basis conception thereof is that after receiving a mode selection command sent from an upper layer, the 10GE device sets the 10GE physical layer channel into a corresponding working mode according to working mode information carried in the command, and provides a working clock needed when working in the working mode for the 10GE physical layer channel.

Wherein, the step of the 10GE device setting the above 10GE physical layer channel into a corresponding working mode according to working mode information carried in the mode selection command can be implemented in, but not limited to, the following way: the 10GE device setting a voltage on a mode selection pin in the 10GE physical layer channel to be a value indicating the corresponding working mode through level control. Preferably, when the voltage on the mode selection pin is set to be a high level, it indicates that the above 10GE physical layer channel will select to work in the 10GE WAN port working mode, and when the voltage is set to be a low level, it indicates that the above 10GE physical layer channel will select to work in the 10GE LAN port working mode; or, when the voltage on the mode selection pin is set to be a high level, it indicates that the above 10GE physical layer channel will select to work in the 10GE LAN port working mode, and when the voltage is set to be a low level, it indicates that the above 10GE physical layer channel will select to work in the 10GE WAN port working mode.

A plurality of frequency division registers are provided within the 10GE device, and the 10GE device has a source clock input, wherein the source clock may be provided by the system. The 10GE device providing a working clock needed when working in the working mode for the 10GE physical layer channel may be implemented in, but not limited to, the following way: the 10GE device outputting a corresponding value to each frequency division register respectively according to the working mode information carried in the mode selection command, the multiple registers performing a concatenation operation on the value assigned thereto and the input clock according to an internally configured algorithm, and outputting the clock obtained after the operation to the 10GE physical layer channel. This clock can be used as the working clock of the 10GE physical layer channel.

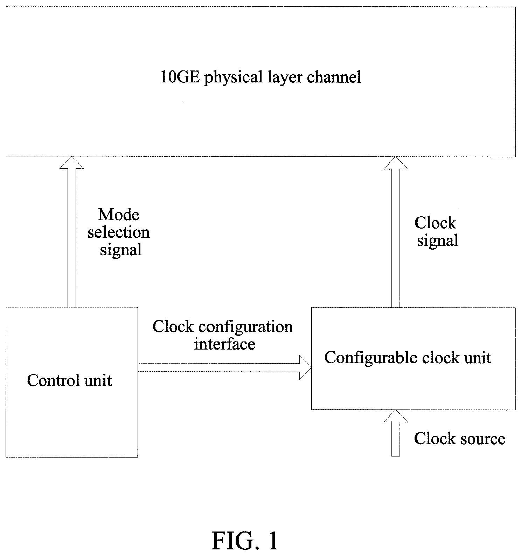

In addition, as shown in FIG. 1, the apparatus of the present invention comprises: a control unit, a configurable clock unit and a 10GE physical layer channel; the control unit and the configurable clock unit can be connected with each other by a certain communication bus (for example, SPI (Serial Peripheral Interface) serial bus or I2C (Inter Integrated Circuit) bus).

The control unit is used to, after receiving a mode selection command sent from an upper layer, set the 10GE physical layer channel into a corresponding working mode according to working mode information carried in the command, and send to the configurable clock unit a clock configuration signal, which carries related information of the working mode;
the 10GE physical layer channel is compatible with a 10GE LAN port working mode and a 10GE WAN port working mode, and is used to work in the 10GE LAN port working mode or the 10GE WAN port working mode under configuration of the control unit;
the configurable clock unit is used to, after receiving the clock configuration signal, provide a working clock needed when working in the working mode for the 10GE physical layer channel according to the related information of the working mode carried in the clock configuration signal.

Wherein, the control unit setting the 10GE physical layer channel into a corresponding working mode according to working mode information carried in the mode selection command can be implemented in, but not limited to, the following way: the control unit setting a voltage on a mode selection pin in the 10GE physical layer channel to be a value indicating the corresponding working mode through level control. Therefore, the control unit can be implemented by a CPU (Central Processing Unit), or a programmable element. Preferably, when the voltage on the mode selection pin is set to be a high level by the control unit, the above 10GE physical layer channel will select to work in the 10GE WAN port working mode, and when the voltage on the mode selection pin is set to be a low level by the control unit, the above 10GE physical layer channel will select to work in the 10GE LAN port working mode; or, when the voltage on the mode selection pin is set to be a high level by the control unit, the above 10GE physical layer channel will select to work in the 10GE LAN port working mode, and when the voltage on the mode selection pin is set to be a low level by the control unit, the above 10GE physical layer channel will select to work in the 10GE WAN port working mode.

A plurality of frequency division registers are provided within the configurable clock unit, and the configurable clock unit has a source clock input, wherein, the source clock may be provided by the system. Then the control unit being used to send to the configurable clock unit a clock configuration signal, which carries related information of the working mode, means that: the control unit is used to output values corresponding to the working mode carried in the mode selection command to the plurality of frequency division registers in the configurable clock unit; and the configurable clock unit being used to provide a working clock needed when working in the working mode for the 10GE physical layer channel according to the related information of the working mode carried in the clock configuration signal after receiving the clock configuration signal means that the configurable clock unit performs a combination operation on the input clock according to an internally configured algorithm based on the value of each frequency division register, and outputs the clock obtained after the operation to the 10GE physical layer channel. This clock can be used as the working clock of the 10GE physical layer channel.

For example, the values output by the 10GE device to the three configurable frequency division registers in the configurable clock unit are N1, N2, N3 respectively, and after the configurable clock unit performs operation processing, the frequency relationship between the output clock and the input clock is F(out)=(F(in)/N3)×N2/N1, wherein, F(out) is the clock frequency output by the configurable clock unit, F(in) is the input clock frequency provided by the system for the configurable clock unit.

The 10GE physical layer channel comprises functions of LAN PHY and WAN PHY, and supports 10GE LAN service and 10GE WAN service, and can be configured to be LAN PHY or WAN PHY through a certain configuration method, therefore, in specific implementation, the 10GE physical layer channel can be implemented by a special PHY chip supporting 10GE LAN and WAN, or the PMD function of the 10GE physical layer channel is implemented by SERDES (Serializer/Deserializer) supporting 10GE and OC-192/STM-64 rate, and the LAN PCS and WAN PCS functions of the 10GE physical layer channel are implemented by a FPGA (Field-Programmable Gate Array). For example, the 10GE physical layer channel can be implemented by a 10 Gigabit Ethernet LAN/WAN transceiver, such as BCM8705 from Broadcom, S19263 from AMCC, etc., or may also be implemented using a Serdes chip BCM8152, plus LAN/WAN PCS sub-layer implemented by FPGA.

The configurable clock unit is constituted by a multi-rate clock frequency doubling chip, a chip of SI53XX series, and a clock drive chip. When the 10GE physical layer channel works in the LAN PHY mode, the configurable clock unit outputs the clock needed by LAN PHY, for example, a clock having a frequency of 161.13MHz, a clock having a frequency of 156.25MHz or clock signals of other frequencies; when the 10GE physical layer channel works in the WAN PHY mode, the configurable clock unit outputs the clock needed by WAN PHY, for example, a clock having a frequency of 155MHz or clock signals of other frequencies.

Description will be further made below through an application example of the present invention.

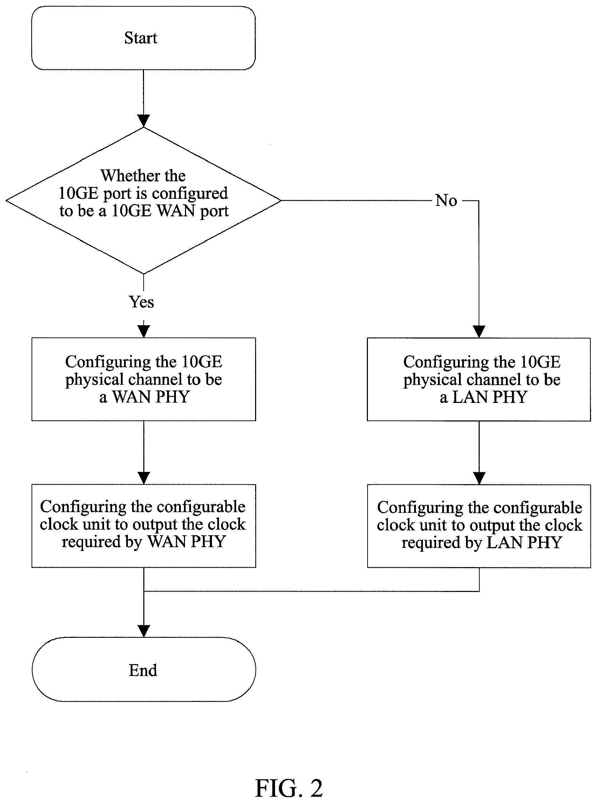

FIG. 2 is a flowchart of working steps of configuring the 10GE port to be a 10GE LAN port or a 10GE WAN port, comprising the following steps.

In step one, the control unit receives an upper-layer command (e.g., a command sent by the network manager), and judges application requirement according to the working mode information carried in the command, i.e., judges whether the port of the 10GE device is to be configured to be a 10GE LAN port or a 10GE WAN port.

In step two, the control unit configures the working mode of the 10GE physical layer channel, and configures the 10GE physical layer channel to be WAN PHY or LAN PHY, i.e., if the control unit judges in the step one that the port of the 10GE device is to be configured to be a 10GE WAN port, then the following operation is carried out: the control unit sets the voltage on mode selection pin in the 10GE physical layer channel to be a high level so that the 10GE physical layer channel works in the WAN PHY mode; if it is judged that the port of the 10GE device is to be configured to be a 10GE LAN port, then the following operation is carried out: the control unit sets the voltage on the mode selection pin in the 10GE physical layer channel to be a low level so that the 10GE physical layer channel works in the LAN PHY mode.

In step three, the control unit may configure the configurable clock unit, and configures the clock frequency output by the configurable clock unit to be a clock required by the working mode of the 10GE physical layer channel, i.e., if the control unit judges in step one that the 10GE port is to be configured to be a 10GE WAN port, the following operation is carried out: the control unit writes a special value into the register group of the configurable clock unit such that the configurable clock unit outputs the clock signal required by the 10GE WAN PHY, for example, a clock signal of 155.52MHz; if the control unit judges in step one that the 10GE port is to be configured to be a 10GE LAN port, the following operation is carried out: the control unit writes a special value into the register group of the configurable clock unit such that the configurable clock unit outputs the clock signal required by the 10GE LAN PHY, for example, a clock signal of 156.25MHz.

Of course, the order of step two and step three is not fixed, and they can also be implemented simultaneously.

By using the method and apparatus compatible with a 10GE LAN port and a WAN port provided by the present invention, the same one 10GE port possesses functions of both 10GE LAN port and WAN port, and the 10GE port can connect 10GE LAN service or 10GE WAN service according to application requirements, thereby expanding the use and application scope of the device.

Although the preferred examples of the present invention have been disclosed for the purpose of illustration, a person having ordinary skill in the art will be aware that various improvements, additions and substitutions are also possible within the scope defined by the claims, and therefore, the scope of the present invention shall not be limited to the above examples but be defined by the claims.

Those skilled in the art shall understand that all of or part of the steps in the above methods can be completed by instructing relevant hardware by programs, and the programs can be stored in a computer readable storage medium, such as a read only memory, a magnetic disk, or an optical disk, etc. Optionally, all of or part of the steps of the above embodiments can also be implemented using one or more integrated circuits. Accordingly, the modules/units in the above embodiments can be implemented in the form of hardware and can also be implemented in the form of software function modules. The present invention is not limited to any particular form of combination of hardware and software.

### Industrial Applicability

By using the present invention, each module in the 10GE device can be configured correspondingly according to application requirements, the 10GE port can be configured into two modes of 10GE LAN port and 10GE WAN port, so that the 10GE port can connect not only the 10GE LAN service but also the 10GE WAN services, thereby realizing the application of the 10GE device in LAN and WAN, enriching the functions of the port without increasing development costs and expanding the application range of the device.

## Claims

1. A method compatible with a 10GE Local Area Network, LAN, port and a Wide Area Network, WAN, port, which is applied to a device containing a 10GE physical layer channel compatible with a 10GE LAN port working mode and a 10GE WAN port working mode, the method comprising the following steps of:
after receiving a mode selection command sent from an upper layer, the device setting the 10GE physical layer channel into a corresponding working mode according to working mode information carried in the command, and providing the 10GE physical layer channel with a working clock needed when the 10GE physical layer channel works in the working mode;
**characterized in that**
three frequency division registers are provided within the device, and the device has a source clock input;
the step of the device providing the 10GE physical layer channel with a working clock needed when the 10GE physical layer channel works in the working mode comprises: the device outputting a corresponding value to each frequency division register respectively according to the working mode information carried in the mode selection command, a circuit in the device performing an operation on the source clock input according to an internally configured algorithm based on the value of each frequency division register, and outputting an output clock obtained after the operation to the 10GE physical layer channel,
wherein the values output by the device to the three frequency division registers are N1, N2, N3 respectively, the internally configured algorithm is: F(out)=(F(in)/N3)×N2/N1, wherein F(out) is the output clock, and F(in) is the source clock input.

2. The method according to claim 1, wherein
the step of the device setting the 10GE physical layer channel into a corresponding working mode according to working mode information carried in the command comprises: the device setting a voltage on a mode selection pin in the 10GE physical layer channel to be a value indicating the corresponding working mode through level control.

3. The method according to claim 2, further comprising:
when the voltage on the mode selection pin is set to be a high level, the 10GE physical layer channel selecting to work in the 10GE WAN port working mode, and when the voltage is set to be a low level, the 10GE physical layer channel selecting to work in the 10GE LAN port working mode; or
when the voltage on the mode selection pin is set to be a high level, the 10GE physical layer channel selecting to work in the 10GE LAN port working mode, and when the voltage is set to be a low level, the 10GE physical layer channel selecting to work in the 10GE WAN port working mode.

4. An apparatus compatible with a 10GE, 10 Gigabit Ethernet, Local Area Network, LAN, port and a Wide Area Network, WAN, port, comprising: a control unit, a configurable clock unit and a 10GE physical layer channel,
wherein the control unit is configured to, after receiving a mode selection command sent from an upper layer, set the 10GE physical layer channel into a corresponding working mode according to working mode information carried in the command, and send to the configurable clock unit a clock configuration signal, which carries related information of the working mode;
the 10GE physical layer channel is compatible with a 10GE LAN port working mode and a 10GE WAN port working mode, and is configured to work in the 10GE LAN port working mode or the 10GE WAN port working mode under configuration of the control unit;
the configurable clock unit is configured to, after receiving the clock configuration signal, provide the 10GE physical layer channel with a working clock needed when the 10GE physical layer channel works in the working mode according to related information of the working mode carried in the clock configuration signal;
**characterized in that**
three frequency division registers are provided within the configurable clock unit, and the configurable clock unit has a source clock input;
the control unit is configured to send to the configurable clock unit a clock configuration signal in the following way: output to each frequency division register in the configurable clock unit a value corresponding to the working mode carried in the mode selection command;
the configurable clock unit is configured to perform an operation on the source clock input according to an internally configured algorithm based on the value of each frequency division register, and output an output clock obtained after the operation to the 10GE physical layer channel,
wherein the values output by the device to the three frequency division registers are N1, N2, N3 respectively, the internally configured algorithm is: F(out)=(F(in)/N3)×N2/N1, wherein F(out) is the output clock, and F(in) is the source clock input.

5. The apparatus according to claim 4, wherein
the control unit is configured to set the 10GE physical layer channel into a corresponding working mode according to working mode information carried in the mode selection command in the following way: setting a voltage on a mode selection pin in the 10GE physical layer channel to be a value indicating the corresponding working mode through level control.

6. The apparatus according to claim 5, wherein the 10GE physical layer channel is configured to,
when the voltage on the mode selection pin is set to be a high level, select to work in the 10GE WAN port working mode, and when the voltage on the mode selection pin is set to be a low level, select to work in the 10GE LAN port working mode; or
when the voltage on the mode selection pin is set to be a high level, select to work in the 10GE LAN port working mode, and when the voltage on the mode selection pin is set to be a low level, select to work in the 10GE WAN port working mode.

7. The apparatus according to any one of claims 4 to 6, wherein
the 10GE physical layer channel is a special physical layer PHY chip supporting a 10GE LAN port and a 10GE WAN port.

8. The apparatus according to claim 4, wherein
the configurable clock unit is constituted by a multi-rate clock frequency doubling chip and a clock drive chip.

## Patentansprüche

1. Ein mit einem 10GE LAN-Port, lokalen Netzwerk-Port, und einem WAN-Port, Weitbereichsnetzwerk-Port kompatibles Verfahren, welches auf eine Vorrichtung angewendet wird, die einen 10GE Physical-Layer-Channel enthält, der mit einem 10GE LAN-Port-Betriebsmodus und mit einem 10GE WAN-Port-Betriebsmodus kompatibel ist, wobei das Verfahren die folgenden Schritte umfasst, dass:
die Vorrichtung nach dem Empfangen eines Moduswahlbefehls, der von einer oberen Schicht gesendet wurde, den 10GE Physical-Layer-Channel in Übereinstimmung mit Betriebsmodusinformationen, die in dem Befehl befördert werden, in einen entsprechenden Betriebsmodus versetzt und den 10GE Physical-Layer-Channel mit einem Arbeitstakt versorgt, der benötigt wird, wenn der 10GE Physical-Layer-Channel in dem Betriebsmodus betrieben wird;
**dadurch gekennzeichnet, dass**
drei Frequenzteilungsregister in der Vorrichtung vorgesehen werden, und die Vorrichtung einen Quellentakteingang aufweist;
der Schritt, dass die Vorrichtung den 10GE Physical-Layer-Channel mit einem Arbeitstakt versorgt, der benötigt wird, wenn der 10GE Physical-Layer-Channel in dem Betriebsmodus betrieben wird, umfasst, dass: die Vorrichtung jeweils einen entsprechenden Wert für jedes Frequenzteilungsregister in Übereinstimmung mit den Betriebsmodusinformationen ausgibt, die in dem Moduswahlbefehl befördert werden, wobei eine Schaltung in der Vorrichtung eine Operation an dem Quellentakteingang in Übereinstimmung mit einem intern konfigurierten Algorithmus auf der Grundlage des Werts jedes Frequenzteilungsregisters ausführt und einen Ausgabetakt, der nach der Operation erhalten wird, an den 10GE Physical-Layer-Channel ausgibt,
wobei die von der Vorrichtung an die drei Frequenzteilungsregister ausgegebenen Werte jeweils N1, N2 und N3 sind und der intern konfigurierte Algorithmus ist: F(out) = (F(in)/N3) x N2/N1, wobei F(out) der Ausgabetakt ist und F(in) der Quellentakteingang ist.

2. Verfahren nach Anspruch 1, wobei
der Schritt, dass die Vorrichtung den 10GE Physical-Layer-Channel in Übereinstimmung mit Betriebsmodusinformationen, die in dem Befehl befördert werden, in einen entsprechenden Betriebsmodus versetzt, umfasst, dass: die Vorrichtung eine Spannung an einem Moduswahlkontakt in dem 10GE Physical-Layer-Channel so einstellt, dass sie einen Wert aufweist, der den entsprechenden Betriebsmodus durch eine Pegelsteuerung anzeigt.

3. Verfahren nach Anspruch 2, das ferner umfasst, dass:
wenn die Spannung an dem Moduswahlkontakt auf einen hohen Pegel eingestellt wird, der 10GE Physical-Layer-Channel wählt, in dem 10GE WAN-Port-Betriebsmodus zu arbeiten, und wenn die Spannung auf einen niedrigen Pegel eingestellt wird, der 10GE Physical-Layer-Channel wählt, in dem 10GE LAN-Port-Betriebsmodus zu arbeiten; oder
wenn die Spannung an dem Moduswahlkontakt auf einen hohen Pegel eingestellt wird, der 10GE Physical-Layer-Channel wählt, in dem 10GE LAN-Port-Betriebsmodus zu arbeiten, und wenn die Spannung auf einen niedrigen Pegel eingestellt wird, der 10GE Physical-Layer-Channel wählt, in dem 10GE WAN-Port-Betriebsmodus zu arbeiten.

4. Eine mit einem 10GE, 10 Gigabit Ethernet, LAN-Port, lokalen Netzwerk-Port, und einem WAN-Port, Weitbereichsnetzwerk-Port kompatible Vorrichtung, umfassend: eine Steuerungseinheit, eine konfigurierbare Takteinheit und einen 10GE Physical-Layer-Channel,
wobei die Steuerungseinheit ausgestaltet ist, um nach Empfang eines Moduswahlbefehls, der von einer oberen Schicht gesendet wird, den 10GE Physical-Layer-Channel, in Übereinstimmung mit Betriebsmodusinformationen, die in dem Befehl befördert werden, in einen entsprechenden Betriebsmodus zu versetzen, und um ein Taktkonfigurationssignal an die konfigurierbare Takteinheit zu senden, welches zu dem Betriebsmodus zugehörige Informationen befördert;
wobei der 10GE Physical-Layer-Channel mit einem 10GE LAN-Port-Betriebsmodus und mit einem 10GE WAN-Port-Betriebsmodus kompatibel ist und ausgestaltet ist, um nach Konfiguration der Steuerungseinheit in dem 10GE LAN-Port-Betriebsmodus oder in dem 10GE WAN-Port-Betriebsmodus betrieben zu werden;
wobei die konfigurierbare Takteinheit ausgestaltet ist, um nach Empfang des Taktkonfigurationssignals in Übereinstimmung mit zu dem Betriebsmodus zugehörigen Informationen, die in dem Taktkonfigurationssignal befördert werden, den 10GE Physical-Layer-Channel mit einem Arbeitstakt zu versorgen, der benötigt wird, wenn der 10GE Physical-Layer-Channel in dem Betriebsmodus betrieben wird;
**dadurch gekennzeichnet, dass**
drei Frequenzteilungsregister in der konfigurierbaren Takteinheit vorgesehen sind, und die konfigurierbare Takteinheit einen Quellentakteingang aufweist;
die Steuerungseinheit ausgestaltet ist, um ein Taktkonfigurationssignal an die konfigurierbare Takteinheit auf folgende Weise zu senden: an jedes Frequenzteilungsregister in der konfigurierbaren Takteinheit wird ein Wert ausgegeben, der dem Betriebsmodus entspricht, der in dem Moduswahlbefehl befördert wird;
die konfigurierbare Takteinheit ausgestaltet ist, um eine Operation an dem Quellentakteingang in Übereinstimmung mit einem intern konfigurierten Algorithmus auf der Grundlage des Werts jedes Frequenzteilungsregisters auszuführen, und um einen Ausgabetakt, der nach der Operation erhalten wird, an den 10GE Physical-Layer-Channel auszugeben,
wobei die Werte, die von der Vorrichtung an die drei Frequenzteilungsregister ausgegeben werden, jeweils N1, N2 und N3 sind, und der intern konfigurierte Algorithmus ist: F(out) = (F(in)/N3) x N2/N1, wobei F(out) der Ausgabetakt ist und F(in) der Quellentakteingang ist.

5. Vorrichtung nach Anspruch 4, wobei
die Steuerungseinheit ausgestaltet ist, um den 10GE Physical-Layer-Channel in Übereinstimmung mit Betriebsmodusinformationen, die in dem Moduswahlbefehl befördert werden, auf folgende Weise in einen entsprechenden Betriebsmodus zu versetzen: Einstellen einer Spannung an einem Moduswahlkontakt in dem 10GE Physical-Layer-Channel auf einen Wert, der den entsprechenden Betriebsmodus durch eine Pegelsteuerung anzeigt.

6. Vorrichtung nach Anspruch 5, wobei der 10GE Physical-Layer-Channel ausgestaltet ist, um
wenn die Spannung an dem Moduswahlkontakt auf einen hohen Pegel eingestellt wird, einen Betrieb in dem 10GE WAN-Port-Betriebsmodus zu wählen, und wenn die Spannung an dem Moduswahlkontakt auf einen niedrigen Pegel eingestellt wird, einen Betrieb in dem 10GE LAN-Port-Betriebsmodus zu wählen; oder
wenn die Spannung an dem Moduswahlkontakt auf einen hohen Pegel eingestellt wird, einen Betrieb in dem 10GE LAN-Port-Betriebsmodus zu wählen, und wenn die Spannung an den Moduswahlkontakt auf einen niedrigen Pegel eingestellt ist, einen Betrieb in dem 10GE WAN-Port-Betriebsmodus zu wählen.

7. Vorrichtung nach einem der Ansprüche 4 bis 6, wobei
der 10GE Physical-Layer-Channel ein spezieller Physical-Layer-Chip, PHY-Chip, ist, der einen 10GE LAN-Port und einen 10GE WAN-Port unterstützt.

8. Vorrichtung nach Anspruch 4,
wobei die konfigurierbare Takteinheit durch einen Multi-Rate-Taktfrequenzverdopplungschip und einen Takttreiberchip gebildet ist.

## Revendications

1. Procédé compatible avec un port de réseau local, LAN, 10GE, un et un port de réseau étendu, WAN, qui est appliqué à un dispositif contenant un canal de couche physique 10GE compatible avec un mode de fonctionnement de port LAN 10GE et un mode de fonctionnement de port WAN 10GE, le procédé comprenant les étapes suivantes
après réception d'une commande de sélection de mode envoyée à partir d'une couche supérieure, le dispositif règle le canal de couche physique 10GE dans un mode de fonctionnement correspondant en fonction d'informations de mode de fonctionnement transportées dans la commande, et fournit au canal de couche physique 10GE une horloge de fonctionnement nécessaire lorsque le canal de couche physique 10GE fonctionne dans le mode de fonctionnement ;
**caractérisé en ce que**
trois registres de division de fréquence sont prévus dans le dispositif, et le dispositif a une entrée d'horloge source ; l'étape de fourniture par le dispositif au canal de couche physique 10GE d'une horloge de fonctionnement nécessaire lorsque le canal de couche physique 10GE fonctionne dans le mode de fonctionnement comprend ce qui suit : le dispositif délivre une valeur correspondante à chaque registre de division de fréquence respectivement en fonction des informations de mode de fonctionnement transportées dans la commande de sélection de mode, un circuit dans le dispositif effectue une opération sur l'entrée d'horloge source selon un algorithme configuré de manière interne sur la base d'une valeur de chaque registre de division de fréquence, et délivre une horloge de sortie obtenue après l'opération au canal de couche physique 10GE,
dans lequel les valeurs délivrées par le dispositif aux trois registres de division de fréquence sont respectivement N1, N2, N3, l'algorithme configuré de manière interne est : F(out) = (F(in)/N3)xN2/N1, où F(out) est l'horloge de sortie, et F(in) est l'entrée d'horloge source.

2. Procédé selon la revendication 1, dans lequel l'étape de réglage par le dispositif du canal de couche physique 10GE dans un mode de fonctionnement correspondant en fonction des informations de mode de fonctionnement transportées dans la commande comprend ce qui suit : le dispositif règle une tension sur une broche de sélection de mode dans le canal de couche physique 10GE sur une valeur indiquant le mode de fonctionnement correspondant au moyen d'une commande de niveau.

3. Procédé selon la revendication 2, comprenant en outre de :
lorsque la tension sur la broche de sélection de mode est réglée sur un niveau haut, le canal de couche physique 10GE choisit de fonctionner dans le mode de fonctionnement de port WAN 10GE, et lorsque la tension est réglée sur un niveau bas, le canal couche physique 10GE choisit de fonctionner dans le mode de fonctionnement de port LAN 10GE ; ou
lorsque la tension sur la broche de sélection de mode est réglée sur un niveau haut, le canal de la couche physique 10GE choisit de fonctionner dans le mode de fonctionnement de port LAN 10GE, et lorsque la tension est réglée sur un niveau bas, le canal de couche physique 10GE choisit de fonctionner dans le mode de fonctionnement de port WAN 10GE.

4. Appareil compatible avec un port de réseau local, LAN, et un port de réseau étendu, WAN, Ethernet 10 Gigabit, 10GE, comprenant : une unité de commande, une unité d'horloge configurable et un canal de couche physique 10GE,
dans lequel l'unité de commande est configurée pour, après avoir reçu une commande de sélection de mode envoyée par une couche supérieure, régler le canal de couche physique 10GE dans un mode de fonctionnement correspondant en fonction d'informations de mode de fonctionnement transportées dans la commande, et envoyer à l'unité d'horloge configurable un signal de configuration d'horloge qui transporte des informations connexes du mode de fonctionnement ;
le canal de couche physique 10GE est compatible avec un mode de fonctionnement de port LAN 10GE et un mode de fonctionnement de port WAN 10GE, et est configuré pour fonctionner dans le mode de fonctionnement de port LAN 10GE ou le mode de fonctionnement port WAN 10GE en vertu de la configuration de l'unité de commande ;
l'unité d'horloge configurable est configurée pour, après avoir reçu le signal de configuration d'horloge, fournir au canal de couche physique 10GE une horloge de fonctionnement nécessaire lorsque le canal de couche physique 10GE fonctionne dans le mode de fonctionnement en fonction des informations connexes du mode de fonctionnement transportées dans le signal de configuration d'horloge ;
**caractérisé en ce que**
trois registres de division de fréquence sont prévus dans l'unité d'horloge configurable, et l'unité d'horloge configurable a une entrée d'horloge de source ;
l'unité de commande est configurée pour envoyer à l'unité d'horloge configurable un signal de configuration d'horloge de la manière suivante : délivrer à chaque registre de division de fréquence dans l'unité d'horloge configurable une valeur correspondant au mode de fonctionnement transportée dans la commande de sélection de mode ; l'unité d'horloge configurable est configurée pour effectuer une opération sur l'entrée d'horloge source selon un algorithme configuré de manière interne sur la base de la valeur de chaque registre de division de fréquence, et délivrer une horloge de sortie obtenue après l'opération au canal de couche physique 10GE,
dans lequel les valeurs délivrées par le dispositif aux trois registres de division de fréquence sont respectivement N1, N2, N3, l'algorithme configuré de manière interne est : F(out) = (F(in)/N3) xN2/N1, où F(out) est l'horloge de sortie, et F(in) est l'entrée d'horloge source.

5. Appareil selon la revendication 4, dans lequel
l'unité de commande est configurée pour régler le canal de couche physique 10GE dans un mode de fonctionnement correspondant en fonction des informations de mode de fonctionnement transportées dans la commande de sélection de mode de la manière suivante : régler une tension sur une broche de sélection de mode dans le canal de couche physique 10GE sur une valeur indiquant le mode de fonctionnement correspondant au moyen d'une commande de niveau.

6. Appareil selon la revendication 5, dans lequel le canal de couche physique 10GE est configuré pour,
lorsque la tension sur la broche de sélection de mode est réglée sur un niveau haut, choisir de fonctionner dans le mode de fonctionnement de port WAN 10GE, et lorsque la tension sur la broche de sélection de mode est réglée sur un niveau bas, choisir de fonctionner dans le mode de fonctionnement de port LAN 10GE ; ou
lorsque la tension sur la broche de sélection de mode est réglée à un niveau haut, choisir de fonctionner dans le mode de fonctionnement de port LAN 10GE, et lorsque la tension sur la broche de sélection de mode est réglée sur un niveau bas, choisir de fonctionner dans le mode de fonctionnement de port WAN 10GE.

7. Appareil selon l'une quelconque des revendications 4 à 6, dans lequel
le canal de couche physique 10GE est une puce de couche physique PHY spéciale supportant un port LAN 10GE et un port WAN 10GE.

8. Appareil selon la revendication 4, dans lequel
l'unité d'horloge configurable est constituée d'une puce de doublage de fréquence d'horloge multidébit et d'une puce d'attaque d'horloge.
